# EUROPEAN PATENT APPLICATION

(11) **EP 0 989 166 A1**
(43) Date of publication of application: **29.03.2000**
(21) Application number: 99916046.8
(22) Date of filing: 12.04.1999
(51) Int. Cl.: C09D 1/00, C09D 5/00, C09D 183/04, B05D 7/24

(54) **INORGANIC COATING COMPOSITION AND HYDROPHILIC INORGANIC COATING FILM**

(30) Priority: 10.04.1998 JP 9866898
(71) Applicant: MATSUSHITA ELECTRIC WORKS, LTD., Kadoma-shi Osaka 571 (JP)
(72) Inventor: TAKAHAMA, Koichi, Amagasaki-shi, Hyogo 661-0026 (JP); INOUE, Minoru, Katano-shi, Osaka 576-0052 (JP); IKENAGA, Junko, Ikeda-shi, Osaka 563-0037 (JP); NAKAMOTO, Shoichi, Neyagawa-shi, Osaka 572-0029 (JP)
(74) Representative: von Kreisler, Alek, Dipl.-Chem.
(86) International application number: JP9901934
(87) International publication number: WO9952983

(57) **Abstract**

The present invention provides an inorganic coating composition which comprises a photo-oxidizable silicone resin having a photo-oxidizable group as a major component, and a photo-semiconductor material. The photo-oxidizable group is at least one type selected from the group consisting of an alkyl group having not less than three carbon atoms, a cycloalkyl group, an aralkyl group, an aryl group, an alkenyl group, a halogen substituted hydrocarbon group, a group having a tertiary hydrogen atom (>CH-), a group having a C-H bond at the α-position based on a carbon-carbon double bond and a group having a branch point. A hydrophilic inorganic film formed by the inorganic coating composition of the present invention is highly sensitive to ultraviolet rays and its surface is rapidly made hydrophilic by weak ultraviolet rays.

## Description

### Technical Field of the Invention

The present invention relates to a hydrophilic inorganic coated film which is formed on a surface of the exterior of a building, a display panel, a vehicle and a glass material and is superior in various functions such as antibacterial ability, mildew-proofing ability, fogging resistance, antistatic ability, staining resistance, weather resistance, and durability and to an inorganic coating composition which can form such a hydrophilic inorganic coated film.

### Background of the Invention

In recent years, an attempt to impart high hydrophilicity to a surface of a product has been made, in order to preventing the surface of glass or mirror from fogging, or to automatically remove the stains, adsorbed to the surface of an outdoor building, by the aid of rain water.

Methods for imparting high hydrophilicity to a surface of a product are disclosed, for instance, in Japanese Patent Application Laid-Open (JP-A) No. S61-83106 and WO96/29375. These methods described there are all characterized in that an inorganic coated film containing a photo-semiconductor material, e.g., titanium oxide is formed on a surface of a product, and the photocatalytic action of the photo-semiconductor material is utilized.

The photocatalytic action of a photo-semiconductor material means the action of decomposing organic substances, etc. present there as the result of redox reaction which is produced on the surface of the photo-semiconductor material when the light (ultraviolet rays) with excitation wavelength (for example, 400 nm) is applied to the photo-semiconductor material. Organic substances are generally hydrophobic. Hence, when these organic substances are decomposed and removed, the surface of the photo-semiconductor material becomes hydrophilic. As a result, the contact angle of water to the surface of the coated film becomes low, and the surface of the coated film tends to get wet (familiar with water).

However, the conventional hydrophilic inorganic coated film has low sensitivity to ultraviolet rays and it takes a certain period of time to develop the photocatalytic effect of the photo-semiconductor material after it is irradiated with ultraviolet rays. Therefore, there are the problems of, for instance, that the coated surface does not become hydrophilic, and tends to fog and stain for a certain period after the film is formed. Also, there is, for instance, the problem of that it takes a long period to develop the photocatalytic action at the place where ultraviolet rays is scarcely applied or in the case that the intensity of ultraviolet rays is low, and the use of the photo-semiconductor materials is limited to the applications to which ultraviolet rays is easily applied.

### Summary of the Invention

The present invention solves such conventional problems and has the object of providing a hydrophilic inorganic coated film whose surface is highly sensitive to ultraviolet rays and is rapidly made hydrophilic by weak ultraviolet rays, and also providing an inorganic coating composition for forming the hydrophilic inorganic coated film.

The present invention provides a hydrophilic inorganic coated film which comprises a photo-oxidizable silicone resin having a photo-oxidizable group as a binder component, and a photo-semiconductor material.

Further, the present invention provides an inorganic coating composition which comprises a photo-oxidizable silicone resin having a photo-oxidizable group as a major component, and a photo-semiconductor material.

### Detailed description of the Invention

The present invention relates to the technic in which an inorganic coating composition which comprises a photo-oxidizable silicone resin as a major component, and a photo-semiconductor material, is applied to a surface of a product to be coated, dried and cured to form a hydrophilic inorganic coated film on a surface of a base material. This hydrophilic inorganic coated film is highly sensitive to ultraviolet rays and whose surface is rapidly made hydrophilic by weak ultraviolet rays.

### Photo-oxidizable silicone resin

The photo-oxidizable silicone resin is a binder component of the hydrophilic inorganic coated film of the present invention and is a component which primarily imparts durability and strength to the coated film, and provides a surface of the coated film with high sensitivity to ultraviolet rays. The photo-oxidizable silicone resin also serves in an oligomer state as a major component of the inorganic coating composition of the present invention. The major component means that the photo-oxidizable silicone resin is present in an amount of 5 to 50% by weight in a solid of the inorganic coating composition. Preferably the silicone resin is present in an amount of 10 to 50% by weight in a solid of the inorganic coating composition.

A photo-oxidizable resin of the present invention is polysiloxane having a photo-oxidizable group which is easily oxidized by ultraviolet rays. The photo-oxidizable group which is easily oxidized by ultraviolet rays, specifically, is the group which may be oxidized more easily than a methyl group or an ethyl group.

For example, the group which fall in this category include an alkyl group having not less than three carbon atoms, a cycloalkyl group, an aralkyl group, an aryl group, an alkenyl group, a halogen substituted hydrocarbon group, a group having a tertiary hydrogen atom (>CH-), a group having a C-H bond at the α-position based on a carbon-carbon double bond and a group having a branch point and a mercapto group-containing group.

Specific examples include monovalent alkyl groups having not less than three carbon atoms which have relatively weak bonding energy such as a propyl group, butyl group, pentyl group, hexyl group, heptyl group and octyl group; cycloalkyl groups such as a cyclopentyl group and cyclohexyl group; aralkyl groups such as a 2-phenylethyl group, 2-phenylpropyl group and 3-phenylpropyl group; aryl groups such as a phenyl group and tolyl group; alkenyl groups such as a vinyl group and allyl group; halogen substituted hydrocarbon groups such as a chloromethyl group, γ-chloropropyl group (also referred to as "3-chloropropyl group") and 3,3,3-trifluoropropyl group; groups having a C-H bond at the α-position based on a carbon-carbon double bond such as γ-acryloxypropyl group (also referred to as "3-acryloxypropyl group") and γ-methacryloxypropyl group (also referred to as "3-methacryloxypropyl group"); and groups having a tertiary hydrogen atom (>CH-) or groups having a branch point such as γ-glycidoxypropyl group (also referred to as "3-glycidoxypropyl group") and 3,4-epoxycyclohexylethyl group. The silicone resin having these functional groups may be used alone or in combination of two or more. Also, the silicone resin may contain either one or two or more of the above functional groups.

The photo-oxidizable silicone resin can be formed by hydrolyzing and condensation-polymerizing hydrolyzable organosilane having a photo-oxidizable group (hereinafter referred to as "photo-oxidizable hydrolyzable organosilane") as a polymerizable component. At this time, it may be copolymerized with hydrolyzable organosilane having no photo-oxidizable group (hereinafter referred to as "non-photo-oxidizable hydrolyzable organosilane").

The photo-oxidizable silicone resin may be formed as follows: an oligomer photo-oxidizable silicone resin is prepared by hydrolysis and condensation-polymerization by first, it is formulated to an appropriate curable inorganic composition, and thereafter the composition is applied, followed by drying and curing.

### Photo-oxidizable hydrolyzable organosilane

The photo-oxidizable hydrolyzable organosilane is preferably organosilane (A) represented by the following formula:

R¹ₘSiX₄₋ₘ (I)

wherein R¹ is a photo-oxidizable group, X is a hydrolyzable group and m is an integer from 1 to 3.

Examples preferable as the photo-oxidizable group R¹ in the formula (I) include a propyl group, butyl group, pentyl group, hexyl group, heptyl group, octyl group, cyclopentyl group, cyclohexyl group, 2-phenylethyl group, 2-phenylpropyl group, 3-phenylpropyl group, phenyl group, tolyl group, vinyl group, allyl group, chloromethyl group, γ-chloropropyl group, 3,3,3-trifluoropropyl group, γ-acryloxypropyl group, γ-methacryloxypropyl group, γ-glycidoxypropyl group and 3,4-epoxycyclohexylethyl group. Particularly preferable R¹ is a phenyl group, 3-acryloxypropyl group and γ-glycidoxypropyl group.

Examples of the hydrolyzable group X include, but is not limited to, an alkoxy group, aryloxy group, acetoxy group, oxime group, enoxy group, amino group, aminoxy group and amide group. Among these groups, an alkoxy group or an aryloxy group having carbons up to 7 in number is preferable in view of availability and easy preparation of the photo-oxidizable silicone resin. Particularly preferable hydrolyzable group X is a methoxy group, ethoxy group, propyloxy group, isopropyloxy group, butyloxy group, isobutyloxy group, t-butyloxy group or phenyloxy group.

It is preferable that m is 1. This is because the strength and hydrophilicity of the hydrophilic inorganic coated film can be easily controlled.

Specific examples of the photo-oxidizable hydrolyzable organosilane include phenyltrimethoxysilane, phenyltriethoxysilane, 3-acryloxypropyltrimethoxysilane, γ -glycidoxypropyltrimethoxysilane and 3,3,3-trifluoropropyltrimethoxysilane (m=1); diphenyldimethoxysilane, diphenyldiethoxysilane and methylphenyldimethoxysilane (m=2); and dimethylisobutylmethoxysilane (m=3). Particularly preferable photo-oxidizable hydrolyzable organosilane is phenyltrimethoxysilane, 3-acryloxypropyltrimethoxysilane and γ-glycidoxypropyltrimethoxysilane.

### Non-photo-oxidizable hydrolyzable organosilane

The non-photo-oxidizable hydrolyzable organosilane preferably used to copolymerize with the photo-oxidizable hydrolyzable organosilane is organosilane (B) represented by the formula:

R²ₘSiX₄₋ₘ (II)

wherein R² is a non-photo-oxidizable group which is not easily oxidized by ultraviolet rays, X is a hydrolyzable group and m is an integer from 1 to 3, and organosilane (C) represented by the formula:

SiX₄ (III)

wherein X represents a hydrolyzable group. These organosilanes may be used by mixing two or more.

Examples of the non-photo-oxidizable group R² in the formula (II) include a methyl group and ethyl group.

As to the non-photo-oxidizable hydrolyzable organosilane (B), m is preferably 1 like the above. Specific examples of the organosilane (B) include methyltrimethoxysilane, methyltriethoxysilane and methyltriisopropoxysilane (m=1); as diorganodialkoxysilane, dimethyldimethoxysilane and dimethyldiethoxysilane (m=2); and trimethylmethoxysilane, trimethylethoxysilane and trimethylisopropoxysilane (m=3).

Specific examples of the non-photo-oxidizable hydrolyzable organosilane (C) include tetramethoxysilane and tetraethoxysilane.

### Inorganic coating composition

### Photo-oxidizable silicone resin

Hydrolysis and condensation-polymerization of the photo-oxidizable hydrolyzable organosilane may be carried out as follows. The photo-oxidizable hydrolyzable organosilane or a mixture of the photo-oxidizable hydrolyzable organosilane and the non-photo-oxidizable hydrolyzable organosilane is diluted using an adequate solvent. To the solution were added water as a curing agent and, as required, a catalyst (for example, one or two or more of organic acids and inorganic acids such as hydrochloric acid, acetic acid, silane halide, chloroacetic acid, citric acid, benzoic acid, dimethyl malonic acid, formic acid, propionic acid, glutaric acid, glycolic acid, maleic acid, malonic acid, toluenesulfonic acid and oxalic acid) in a necessary amount (may be heated as required (for instance, at 40 to 100°C)) to carry out hydrolysis and condensation-polymerization, thereby prepolymer is obtained.

The amount of water used to prepare the photo-oxidizable silicone resin (oligomer) is in a range between 0.001 and 0.5 mol and preferably 0.01 and 0.4 mol per one mol equivalent of the hydrolyzable group (X) contained in the above hydrolyzable organosilane. If the amount of water is less than 0.001 mol, partial hydrolysis becomes insufficient, whereas if the amount exceeds 0.5 mol, stability of the resulting partial hydrolysate becomes poor. Here, the aforementioned amount of water used in the partial hydrolysis reaction of the hydrolyzable organosilane is the amount of the water which is added separately in the case of using an organic solvent as a reaction solvent, or the amount of the water which is at least contained in advance in the reaction solvent among the water which is contained in advance in the reaction solvent and the water which is added separately in the case of using only water or a mixed solvent of an organic solvent and water as a reaction solvent.

If the amount of the water which is originally contained in the reaction solvent suffices for the above defined amount to be used, it is unnecessary to add water separately. If the amount of the water which is originally contained in the reaction solvent does not suffice for the above amount to be used, it is necessary to add water separately until the amount reaches the above defined amount to be used. In this case, the amount of the above water to be used is the sum of the amount of the water which is originally contained in the reaction solvent and the amount of the water which is added separately. It is to be noted that even if the amount of only the water originally contained in the reaction solvent suffices for the above defined amount of water to be used, water may be added separately. In this case, the amount of the above water is also the sum of the amount of the water which is originally contained in the reaction solvent and the amount of the water which is added separately. However, the water is added separately so that the total amount of the water does not exceed the above upper limit (0.5 mol per one mol of the hydrolyzable group (X)).

The pH of the photo-oxidizable silicone resin (oligomer) is controlled preferably 2.0 to 7.0, more preferably 2.5 to 6.5 and most preferably 3.0 to 6.0 to obtain the performance of the resin for a long period of time. If the pH of this component is out of the above range, durability in performances of the photo-oxidizable silicone resin (oligomer) component, especially under the condition that the amount of water is not less than 0.3 mol per one mol of the hydrolyzable group (X), becomes remarkably poor.

When the pH is out of the above range, it may be controlled by adding a basic reagent such as ammonia or ethylenediamine if the pH is in a more acidic side than the above range, and by adding an acidic reagent such as hydrochloric acid, nitric acid or acetic acid if the pH is in a more basic side than the above range. However, the method for controlling pH is not limited.

It is desirable that the weight average molecular weight (Mw) of the obtained photo-oxidizable silicone resin (prepolymer) is controlled to not less than 900 and preferably not less than 1000 as converted into polystyrene. When the distribution of molecular weight (weight average molecular weight (Mw)) of the silicone resin is lower than 900, curing shrinkage in the condensation-polymerization of the silicone rein is large with the result that cracks tend to be produced in the coated film after the coated film is cured.

The photo-oxidizable silicone resin may be obtained by hydrolyzing and condensation-polymerizing a mixture of the photo-oxidizable hydrolyzable organosilane and the non-photo-oxidizable hydrolyzable organosilane.

### Photo-oxidizable silicone resin (1)

In the first preferred embodiment, the organosilanes (A), (B) and (C) are used in combination. The organosilanes (A) and (B) preferred to be used are those corresponding to formulae (I) and (II) in which m is 1, respectively. In this case, the combination proportion of the organosilane (A) is not less than 5 mol% and preferably 5 to 50 mol% based on the total mols of the organosilanes (A) and (B). If the combination proportion of the organosilane (A) is below 5 mol%, the effect of adding organosilane (A) becomes poor.

Also, as to the mixing ratio of the organosilane (C) to the organosilanes (A) and (B), the organosilane (C) is added in an amount of 0.1 to 20 mol, preferably 0.1 to 18 mol and 0.1 to 15 mol based on one mol of the sum of the organosilanes (A) and (B). If the mixing ratio of the organosilane (C) is below 0.1 mol, hardness of the resulting hydrophilic inorganic coated film becomes poor whereas if the mixing ratio is more than 20 mol, the coated film becomes too hard and hence cracks tend to be produced.

The organosilane (A) or (B) corresponding to formula (I) or (II) in which m is 2, may be blended as required. In this case, such organosilane (A) or (B) is used in an amount up to 0.6 mol, preferably up to 0.4 mol and most preferably up to 0.3 mol based on the total mols of the organosilanes (A), (B) and (C). If the mixing ratio of the organosilane (A) or (B) is over 0.6 mol, hardness of the hydrophilic inorganic coated film to be formed becomes poor. The photo-oxidizable silicone resin obtained in this embodiment is referred to as photo-oxidizable silicone resin (1).

### Photo-oxidizable silicone resin (2)

In the second preferred embodiment, the organosilanes (A) and (B) are used in combination. The mixing ratio of the organosilane (A) is not less than 10 mol% and preferably 10 to 50 mol% based on the total mols of the organosilanes (A) and (B). If the amount of the organosilane (A) is below 10 mol%, the effect of adding organosilane (A) becomes poor.

It is desirable that the organosilane of which m is 1 is used in a proportion of at least 50 mol% and preferably 60 to 90 mol% based on the total amount of the organosilanes (A) and (B). If the proportion is less than 50 mol%, sufficient hardness of the coated film is not obtained and curability of the coated film by drying becomes poor. The photo-oxidizable silicone resin obtained in this embodiment is referred to as photo-oxidizable silicone resin (2).

The photo-oxidizable silicone resin (2) may be used by introducing polyorganosiloxane represented by the formula:

R³ₐSi(OH)_{b}O_{(4-a-b)/2} (IV)

wherein R³ represents a monovalent hydrocarbon group having 1 to 8 carbon atoms and a and b respectively are integers which satisfy the following equations: 0.2≦a≦2, 0.0001≦b ≦3 and a+b<4, for the purpose of accelerating the hydrophilicity development at a surface of the coated film.

Examples of R³ in the formula (IV) include, but is not limited to, preferably an alkyl group having 1 to 4 carbon atoms, phenyl group, vinyl group, γ-glycidoxypropyl group, γ-methacryloxypropyl group, γ-aminopropyl group and 3,3,3-trifluoropropyl group and more preferably a methyl group and phenyl group.

a and b respectively are the integers which satisfy the relation of the formula (IV). If a is less than 0.2 or b is more than 3, cracks may be formed in the cured coated film of the inorganic coating composition. When a is more than 2 and is not more than 4 or b is less than 0.0001, the coated film may not be well cured.

This is the compound generally referred to as a silanol group-containing polyorganosiloxane. This compound can be obtained by hydrolyzing one or a mixture of two or more of methyltrichlorosilane, dimethyldichlorosilane, phenyltrichlorosilane, diphenyldichlorosilane or alkoxysilanes corresponding to these silanes by using a large quantity of water by a well-known method.

When an alkoxysilane is used and hydrolyzed by a well-known method to obtain a silanol group-containing polyorganosiloxane, there is the case that a small amount of alkoxy group remains unhydrolyzed. That is, there is the case that a polyorganosiloxane in which a silanol group and a minute alkoxy group coexist is obtained, such a polyorganosiloxane may be used in the present invention.

A method for introducing the silanol group-containing polyorganosiloxane into the photo-oxidizable silicone resin (2) may preferably be conducted as follows in view of film-forming ability and process simplification: the silanol group-containing polyorganosiloxane is dissolved in the reaction solution which is used for preparing the photo-oxidizable silicone resin (2), and condensation-polymerization is conducted. However, the method is not limited to, and for instance, the silanol group-containing polyorganosiloxane may be mixed separately with the photo-oxidizable silicone resin (2).

The mixing ratio of the photo-oxidizable silicone resin (2) to the silanol group-containing polyorganosiloxane is generally 0.5 to 99.5% by weight: 99.5 to 0.5% by weight, preferably 2.5 to 97.5% by weight: 97.5 to 2.5% by weight and more preferably 5 to 95% by weight: 95 to 5% by weight on the solid basis.

If the mixing ratio of the photo-oxidizable silicone resin (2) is less than 0.5% by weight, curability at room temperature becomes poor and also hardness of the coated film becomes poor. On the other hand, if the mixing ratio of the photo-oxidizable silicone resin (2) is more than 99.5 parts by weight, curability becomes unstable and performances of the resulting coated film may become poor.

### Photo-semiconductor material

A photo-semiconductor material is contained in the inorganic coating composition of the present invention in addition to the photo-oxidizable silicone resin. Examples of the photo-semiconductor material to be used include, but is not limited to, metal oxides such as titanium oxide, zinc oxide, tin oxide, iron oxide, zirconium oxide, tungsten oxide, chromium oxide, molybdenum oxide, ruthenium oxide, germanium oxide, lead oxide, cadmium oxide, copper oxide, vanadium oxide, niobium oxide, tantalum oxide, manganese oxide, cobalt oxide, rhodium oxide, nickel oxide and rhenium oxide, and strontium titanate which are desirable because the effect of promoting curability (particularly curability at low temperature including room temperature) of the coated film is also obtained. The photo-semiconductor materials may be used either singly or in combination of two or more.

Among these compounds, the above metal oxides are desirable in the point that they are easily usable practically, and titanium oxide is particularly desirable in view of its photocatalytic performance, curing-promoting performance, safety, availability and cost. It is to be noted that when titanium oxide is used as the photo-semiconductor material, those which have anatase type crystal are preferably used because they have the highest photocatalytic performance and curing-promoting performance, and these performances are maintained for a long period of time and developed in a short period of time. These photo-semiconductor materials may be used either singly or in combinations of two or more.

When it is desired for the coated film to be transparent, the average primary particle diameter of the photo-semiconductor material is preferably not more than 50 µm, more preferably not more than 5 µm and most preferably not more than 0.5 µm.

The photo-semiconductor material prior to be dispersed in the coating may have any form such as powder, fine particle powder or solution dispersion sol particle as far as it is dispersible in the coating. Regardless of the above, those having a sol form, especially, at a pH of not more than 7 are highly convenient for use since the curing may proceed in a shorter time. In the case of using those having a sol form, a dispersion medium is preferably an organic solvent in light of the preparation of the coating though it may be either water or an organic solvent.

Moreover, a raw material of the photo-semiconductor material is not particularly limited, as far as it finally exhibits the quality as the photo-semiconductor material.

It is well-known that the photo-semiconductor material, when it is irradiated with ultraviolet rays, creates active oxygen (photo-catalysis). The active oxygen can oxidize and decompose organic materials. Hence, this characteristics can be utilized to obtain the self-cleaning effect in which a carbon type staining component (e.g., carbon fractions contained in exhaust gas from automobiles and tar from cigarettes) adhered to a coated product is decomposed; the deodorizing effect in which an offensive odor component represented by an amine compound and an aldehyde compound is decomposed; the antibacterial effect in which generation of a bacterial component represented by coli bacillus and Staphylococcus aureus is prevented; and the mildew-proofing effect. The following effect is also obtained: when a coated film including the photo-semiconductor material is irradiated with ultraviolet rays, the photo-semiconductor material serves to produce hydroxide radicals from water by its photocatalytic action and these hydroxide radicals decompose and remove water-repelling stains, such as organic substances, which is adhered to a surface of the coated film, and hydrophilicity (wettability) of the coated film to water is thereby further improved, whereby, for instance, high level fogging resistance and staining resistance by the aid of the rain water cleaning are obtained and maintained for a long period of time.

Furthermore, the photo-semiconductor material has an antistatic function based on its photocatalytic action, and this function also serves to the staining resistance. For instance, when a coated film of the inorganic coating composition is irradiated with light, the surface resistance of the coated film is converted by the action of a photo-semiconductor material contained in the coated film to develop antistatic effect and hence a surface of the coated film becomes resistant to stain. Though it is not clearly confirmed the mechanism by which the surface resistance of the coated film is converted at the time when light is irradiated to the coated film which contains the photo-semiconductor material, it is considered that the surface resistance of the coated film is converted by the effect of electrons and holes created by the irradiation with light.

When metal is carried on the surface of the photo-semiconductor material, the photocatalytic effect of the photo-semiconductor material is increased. This mechanism is, though not clearly confirmed, considered to be related to the fact that metal is carried on the surface of the photo-semiconductor material, charge separation in the photo-semiconductor material is promoted, and thereby the possibilities of the elapse of electron and holes generated by the charge separation are converted.

As the metals which may be carried on the surface of the photo-semiconductor material, for example, silver, copper, iron, nickel, zinc, platinum, gold, palladium, cadmium, cobalt, rhodium and ruthenium are preferable because they promote the charge separation in the photo-semiconductor material. Either one type or two or more types of metal may be carried.

The amount of the metal to be carried is not limited to, but is preferably 0.1 to 10% by weight and more preferably 0.2 to 5% by weight on the basis of the photo-semiconductor material. If the amount is less than 0.1% by weight, the effect of carrying becomes insufficient, whereas even if the amount exceeds 10% by weight, the effect is not so much increased and the problems such as discoloration, performance degradation and the like tend to arise on the contrary.

Examples of the method for carrying the metal include, but not limited to, the dipping method, impregnation method and photoreduction method.

Also, a crosslinked clay which carries the photo-semiconductor material between the layers may be used. By introducing the photo-semiconductor material between the layers, the photo-semiconductor material is carried by fine particles whereby the photocatalytic performance is improved.

The combination proportion of the photo-semiconductor material is 5 to 80 parts by weight and preferably 10 to 50 parts by weight for 100 parts by weight of the total amount of the photo-oxidizable silicone resin and the photo-semiconductor material on the solid basis. Also, when metal is carried on a surface of the photo-semiconductor material, the proportion is 1 to 75 parts by weight and preferably 3 to 45 parts by weight.

When the amount of the photo-semiconductor material is smaller than the above range, there is a tendency that sufficient photocatalytic function may not be obtained. When the amount is larger than the above range, there is a tendency that cracks tend to be produced, for example, thereby reducing the performance of the coated film. The aforementioned amount of the photo-semiconductor material in the case of carrying metal on the surface of the photo-semiconductor material means an amount excluding the carried metal.

### Additives

The inorganic coating composition may comprise various functional components in addition to the photo-oxidizable silicone resin and the photo-semiconductor material for the convenience of film-forming operation and for imparting various functions to the coated film to be formed. Such functional components include curing catalysts, fillers, colorants, film-forming adjuvants, application adjuvants, antioxidants and UV absorbers.

The inorganic coating composition may further include a curing catalyst for promoting the curing of the applied layer by promoting condensation reaction of the silicone resin. Examples of the curing catalyst include, but is not limited to, alkyl titanates; metal carboxylates such as tin octylate, dibutyltin dilaurate and dioctyltin dimaleate; amine salts such as dibutylamine-2-hexoate, dimethylamine acetate and ethanolamine acetate; quaternary ammonium carboxylates such as tetramethylammonium acetate; amines such as tetraethylpentamine, amine type silane coupling agents such as N-β-aminoethyl-γ-aminopropyltrimethoxysilane and N-β-aminoethyl-γ-aminopropylmethyldimethoxysilane; acids such as p-toluenesulfonic acid, phthalic acid and hydrochloric acid; aluminum compounds such as aluminum alkoxide and aluminum chelate; alkali metal salts such as lithium acetate, potassium acetate, lithium formate, sodium formate, potassium phosphate and potassium hydroxide; titanium compounds such as tetraisopropyl titanate, tetrabutyl titanate and titanium tetraacetyl acetonate; and silane halides such as methyltrichlorosilane, dimethyldichlorosilane and trimethylmonochlorosilane. However, the materials other than the above compounds may be employed insofar as they are effective to promote condensation reaction of the silicone resin.

When the inorganic coating composition comprises the curing catalyst, the amount of the curing catalyst is not more than 10 parts by weight, and more preferably not more than 8 parts by weight for 100 parts by weight of the silicone resin on the solid basis. When the amount exceeds 10 parts by weight, the preserving (storing) stability of the inorganic coating composition may become poor.

The inorganic coating composition may comprise fillers (film-forming adjuvant) such as silica for increasing the hardness of the cured coating to be formed and improving smoothness and crack resistance. As the silica, well-known materials may be used.

The colloidal silica to be employed is not limited to, but may be for example, the water-dispersion colloidal silica or the organic solvent dispersion colloidal silica of non-aqueous type such as alcohol type. The colloidal silica usually contains silica as a solid in an amount of 20 to 50% by weight. From this value, the combination proportion of silica can be determined. Also, in the case of using water-dispersion colloidal silica, water present as a component other than solid components can be used as a curing agent as shown later. The water dispersion colloidal silica is usually made from water glass and is commercially available easily. Also, the organic solvent dispersion colloidal silica can be easily prepared if an organic solvent is used in place of the water used to produce the aforementioned water dispersion colloidal silica. Such an organic solvent dispersion colloidal silica is commercially available easily likewise the water dispersion colloidal silica.

In the organic solvent dispersion colloidal silica, the type of organic solvent in which colloidal silica is dispersed is not particularly limited. Examples of the organic solvent include lower aliphatic alcohols such as methanol, ethanol, isopropanol, n-butanol and isobutanol; ethylene glycol derivatives such as ethylene glycol, ethylene glycol monobutyl ether and ethylene glycol acetate monoethyl ether; diethylene glycol derivatives such as diethylene glycol and diethylene glycol monobutyl ether; and diacetone alcohol or the like. One type or two or more types selected from the group consisting of these compounds may be used. Toluene, xylene, ethyl acetate, butyl acetate, methyl ethyl ketone, methyl isobutyl ketone, methyl ethyl ketoxime or the like may be used in combination of these hydrophilic organic solvents.

Incidentally, it is desirable that the silica is introduced into the coating in the form of being dispersed in the reaction solvent which is used in the preparation of the photo-oxidizable silicone resin, in view of film-forming ability and process simplification. However, this method is not exclusive. For instance, a photo-oxidizable silicone resin is obtained without employing silica, the silica is mixed with the resin, and the resulting mixture may be introduced into the inorganic coating composition. Otherwise, the silica may be introduced into the inorganic coating composition separately from the silicone resin.

Silica has the aforementioned effect. However, if the combination proportion is excessively large, the cured coated film of the inorganic coating composition becomes too hard, and cracks of the coating may be caused. Therefore, when the inorganic coating composition contains silica, the content of silica is 5 to 50 parts by weight and preferably 5 to 30 parts by weight for 100 parts by weight of the photo-oxidizable silicone resin on the solid basis. When the content is less than 5 parts by weight, the desired hardness of the coating may not be obtained whereas if the content is more than 30 parts by weight, cracks of the coating may be produced.

The inorganic coating composition can be toned by further comprising colorants such as pigments and dyes.

Preferable examples of the pigment which can be used are, but is not limited to, organic pigments such as carbon black, quinacridone, naphthol red, cyanine blue, cyanine green and Hansa yellow; and inorganic pigments such as titanium oxide, barium sulfate, iron oxide red and complex metal oxides. One type or combinations of two or more types selected from the group consisting of these materials may be used. The pigment may be dispersed using a common method, for example, a method in which pigment powder is directly dispersed by using, but is not limited to, a daino mill or a paint shaker. At this time, dispersing agents, dispersion adjuvants, thickeners and coupling agents may be used. The amount of the pigment is not particularly limited because the masking ability differs depending upon the types of pigment, the amount of the pigment is, for example 5 to 80 parts by weight and preferably 10 to 70 parts by weight for 100 parts by weight of the silicone resin on the solid basis. When the amount is less than 5 parts by weight, the masking ability may become poor, whereas when the amount exceeds 80 parts by weight, there is the case where the smoothness of the coated film is impaired.

Examples of the dye which may be used include, but is not limited to, an azo type, anthraquinone type, indicoid type, sulfide type, triphenylmethane type, xanthene type, alizarin type, acridine type, quinoneimine type, thiazole type, methine type, nitro type or nitroso type dyes. One type or combinations of two or more types selected from the group consisting of these compounds may be used. The amount of the dye is not particularly limited because the masking ability differs depending upon the types of dye, the amount of the dye is, for example 5 to 80 parts by weight and preferably 10 to 70 parts by weight for 100 parts by weight of the silicone resin on the solid basis. When the amount is less than 5 parts by weight, the masking ability may become poor, whereas when the amount exceeds 80 parts by weight, there is the case where the smoothness of the coated film is impaired.

It is to be noted that a leveling agent, metal powder, glass powder, antibacterial agent, antioxidant and ultraviolet absorber or the like may be comprised in the inorganic coating composition to the extent that the effect of the present invention is not adversely affected.

### Production of inorganic coating composition

A process for preparing the inorganic coating composition is not particularly limited, and each component may be mixed using, for instance, a usual process and apparatus. The form of each component when it is introduced into the coating is not limited to, but for example, may be a liquid as it is, a solution produced by dissolving each component in a solvent, a dispersion solution produced by dispersing each component in a dispersion medium, or a solid including powder. When each component is introduced in the form of a solution or a dispersion solution, water, the aforementioned organic solvent or a mixture of water and the aforementioned organic solvent, for example, may be used as its solvent or dispersion medium. Each component may be added separately, or two or more components may be mixed in advance. The resulting mixture may be mixed with the remainder components, or all the components may be mixed at the same time. The timing of the addition or mixing of each component is also not particularly limited.

The inorganic coating composition may optionally be diluted with various organic solvents at the time when it is used in view of handling easiness, or the inorganic coating composition may be provided in the state that it is diluted with the same organic solvents. The type of organic solvent may be appropriately selected corresponding to the type of a monovalent hydrocarbon group contained in each silicone resin component or to the molecular weight of each silicone resin component. Examples of such an organic solvent may include, but is not limited to, lower aliphatic alcohols such as methanol, ethanol, isopropanol, n-butanol and isobutanol; ethylene glycol derivatives such as ethylene glycol, ethylene glycol monobutyl ether and ethylene glycol acetate monoethyl ether; diethylene glycol derivatives such as diethylene glycol and diethylene glycol monobutyl ether; and toluene, xylene, hexane, heptane, ethyl acetate, butyl acetate, methyl ethyl ketone, methyl isobutyl ketone, methyl ethyl ketoxime and diacetone alcohol. One type or two or more types selected from the group consisting of these compounds may be used. The dilution proportion with the organic solvent is not limited to, and it may be appropriately determined as required.

It is desirable that the total concentration of the photo-oxidizable silicone resin and the photo-semiconductor material in the inorganic coating composition be controlled to not more than 5% by weight for the total amount of the coating on the solid basis since the storage stability of the coating is improved and a thin coated film is easily formed, thereby cracking or peeling of the coated film may be prevented. From these points, the above total concentration is more preferably not more than 2% by weight and most preferably not more than 1% by weight. Also, the lower limit of the above total concentration is preferably 0.001% by weight and more preferably 0.01% by weight. If the above total concentration is not more than 0.001% by weight, functions of the coated film may become poor, or a number of layers must be formed by coating, which is undesirable.

Examples of the inorganic coating composition comprising the photo-oxidizable silicone resin (1) include those which comprises the photo-oxidizable silicone resin (1), the photo-semiconductor material, and a curing catalyst. The proportion of each component is as already explained.

When the inorganic coating composition containing the photo-oxidizable silicone resin (1) is heated at low temperature or allowed to stand at room temperature, the condensation reaction among the hydrolyzable groups comprised in the photo-oxidizable silicone resin (1) proceeds to form a cured coated film. Hence, such a functional inorganic coating is not almost affected by moisture even when it is cured at room temperature. Also, heat treatment promotes a condensation reaction to form a cured coated film.

The functional inorganic coating composition comprising the photo-oxidizable silicone resin (1) may cure not only at raised temperature but also at room temperature. It can be hence used in a wide range of drying and curing conditions or in wide temperature conditions. Therefore, the inorganic coating composition can be applied to a base material whose shape is not evenly heated, a base material having large size, or a base material having poor heat resistance. The inorganic coating composition is also employed even when heat is hardly applied, for example, in the case that the outdoor coating is conducted. It therefore has high industrial value.

Examples of the inorganic coating composition comprising the photo-oxidizable silicone resin (2) include those which comprises the photo-oxidizable silicone resin (2), the silanol group-containing polyorganosiloxane, the photo-semiconductor material, silica, and a curing catalyst.

Although the proportion of each component is as already explained, the proportion of the curing catalyst is in a range between preferably 0.0001 and 10 parts by weight, more preferably 0.0005 and 8 parts by weight and most preferably 0.0007 and 5 parts by weight for 100 parts by weight of the sum of the photo-oxidizable silicone resin and silanol group-containing polyorganosiloxane on the solid basis.

When the proportion of the curing catalyst is less than 0.0001 parts by weight, curability at room temperature may become poor, and sufficient hardness of the coating may not be obtained. When the proportion is more than 10 parts by weight, heat resistance and weather resistance of the cured coated film may become poor, or hardness of the cured coated film becomes too high, and cracks may be formed.

In the case that the photo-oxidizable silicone resin (2) and the polyorganosiloxane having a silanol group are used in combination, a hydrolyzable group contained in the photo-oxidizable silicone resin (2) condensation-reacts with a silanol group contained in the polyorganosiloxane in the presence of the curing catalyst by allowing them to stand at room temperature or by heating them at low temperature to form a cured coated film. Hence, such a functional inorganic coating is not almost affected by moisture even when it is cured at room temperature. Also, the cured coated film can be formed by heat treatment for promoting the condensation reaction.

The functional inorganic coating composition comprising the photo-oxidizable silicone resin (2) may cure not only at raised temperature but also at room temperature. It can be hence used in a wide range of drying and curing conditions or in wide temperature conditions. Therefore, the inorganic coating composition can be applied to a base material whose shape is not uniformely heated, a base material having large size, or a base material having poor heat resistance. The inorganic coating composition is also employed even when heat is hardly applied, for example, in the case that the outdoor coating is conducted. It therefore has high industrial value.

### Hydrophilic inorganic coated film

The hydrophilic inorganic coated film is usually formed by applying the inorganic coating composition to a surface of a product to be coated, followed by drying and curing.

A method for applying the inorganic coating composition is not limited. The application method can be selected from various usual applying methods such as the brush coating, spray coating, dip coating, roll coating, flow coating, curtain coating, knife coating and spin coating.

A method for curing the coated film of the inorganic coating composition, is not limited to, and a well-known method may be used. The temperature for curing also is no limited to, and a wide temperature range from room temperature to temperatures raised by heating can be selected depending on the desired performance of the cured coated film and each heat resistance of the photo-semiconductive material and the base material.

The thickness of the cured coated film to be formed from the inorganic coating composition is not limited to, but it may be of the order of 0.01 to 1 µm, thereby cracking or peeling of the cured coated film may be prevented. In order to develop various functions of the coated film more efficiently and to shorten curing time at room temperature and in order to keep the cured coated film being bonded or supported stably for a long period of time, the thickness is preferably 0.01 to 0.5 µm and more preferably 0.01 to 0.2 µm.

Examples of the base material (which is also a base material used for a hydrophilic coated product of the present invention) to which the inorganic coating composition of the present invention is applied include, but is not limited to, an inorganic base material, an organic base material, an inorganic/organic composite base material and a coated base material produced by forming at least one inorganic coated film and/or at least one organic coated film on any one of the above organic, inorganic and inorganic/organic composite base material.

Examples of the inorganic base material include, but is not limited to, a metal base material, a glass base material; enamel; a water glass panel; an inorganic construction material such as inorganic cured bodies; and ceramic.

Examples of the metal base material include, but is not limited to, non-ferrous metals [for example, aluminum (JIS-H4000 and the like), aluminum alloys (duralumin and the like), copper, zinc and the like], iron, steel [for example, rolled steel (JIS-G3101 and the like), molten zinc plating steel (JIS-G3302 and the like), (rolled) stainless steel (JIS-G4304, G4305 and the like) and the like], tin plates (JIS-G3303 and the like) and other metals in general (including alloys).

Examples of the glass base material include, but is not limited to, sodium glass, Pyrex glass, quartz glass and non-alkali glass.

The enamel is produced by baking a glassy enamel graze onto a metal surface to coat the surface. Examples of its base metal include, but is not limited to, soft steel plates, steel plates, cast iron and aluminum. The enamel graze is not particularly limited, and those well-known to the art may be employed.

The water glass panel is produced by applying and baking sodium silicate onto a cement substrate such as slate.

The inorganic cured bodies mean base materials in general which are produced by curing and molding inorganic materials. Examples of the inorganic hard bodies include, but is not limited to, fiber reinforced cement plates (JIS-A5430 and the like), ceramic type sidings (JIS-A5422 and the like), cemented excelsior boards (JIS-A5404 and the like), pulp cement plates (JIS-A5414 and the like), slate/cemented excelsior laminated plates (JIS-A5426 and the like), gypsum board products (JIS-A6901 and the like), clay roof tiles (JIS-A5208 and the like), pressed cement roof tiles (JIS-A5402 and the like), clay tiles (JIS-A5209 and the like), masonry concrete block (JIS-A5406 and the like), terrazzo (JIS-A5411 and the like), prestressed concrete double T slabs (JIS-A5412 and the like), ALC panels (JIS-A5416 and the like), hollow prestressed concrete panels (JIS-A6511 and the like) and common bricks (JIS-R1250 and the like).

Examples of the ceramic base material include, but is not limited to, alumina, zirconia, silicon carbide, silicon nitride and the like.

Examples of the organic base material include, but is not limited to, plastic, lumber, wood, paper and the like.

Examples of the plastic base material include, but is not limited to, thermosetting or thermoplastic plastics such as a polycarbonate resin, an acrylic resin, an ABS resin, a vinyl chloride resin, an epoxy resin and a phenol resin and the fiber reinforced plastic (FRP) in which a plastic material is reinforced with organic fibers such as nylon fibers.

Examples of the inorganic/organic composite base material include, but is not limited to, the fiber reinforced plastics (FRP) in which the plastic material is reinforced with inorganic fibers such as glass fibers and carbon fibers.

Examples of the organic coated film which is comprised in the coated base material include, but is not limited to, the cured coated film which is made of the coating material including an acrylic resin, an alkyd resin, a polyester resin, an epoxy resin, an urethane resin, an acryl silicone resin, a rubber chloride resin, a phenol resin, or a melamine resin.

Examples of the inorganic coated film which is comprised in the coated base material include, but is not limited to, the cured coated film which is made of the coating material including an inorganic resin such as a silicone resin.

When the inorganic coating composition is applied to a base material, there is the case where desired adhesiveness and weather resistance are hardly obtained depending on the qualities and surface condition of the base material. Therefore, a primer coated film may be formed in advance on a surface of the base material before the coated film is formed by applying and curing the inorganic coating composition. The primer layer may be organic or inorganic and is not particularly limited. Examples of the organic primer layer include a cured resin layer of an organic primer composition which contains at least one organic resin selected from the group consisting of a nylon resin, an alkyd resin, an epoxy resin, an acrylic resin, an organic modified silicone resin (e.g., an acrylic silicone resin), a rubber chloride resin, an urethane resin, a phenol resin, a polyester resin and a melamine resin in an amount of not less than 10% by weight as a solid. Examples of the inorganic primer layer include a cured resin layer of an inorganic primer composition which contains an inorganic resin such as a silicone resin in an amount of not less than 90% by weight as a solid.

The thickness of the primer coated film is not limited to, but is preferably, for example, 0.1 to 50 µm and more preferably 0.5 to 10 µm. If the thickness is too thin, the desired adhesion or weather resistance may not be achieved whereas if the thickness is too thick, foams may occur on drying.

Incidentally, a base material provided with at least one organic primer layers and/or the inorganic primer layers on the surface thereof is included in the category of the coated base material. In other words, the coated film provided on a surface of the coated base material may be the primer layer.

Also, the primer layer may include colorants such as pigments and dyes as required for color toning. Examples of the colorants include, the colorants mentioned above as those which can be added to the inorganic coating composition. A preferable range of the amount of the colorant to be combined in the primer layer is the same as in the case of the inorganic coating composition. However, although the amount is on the solid basis, it is defined based on 100 parts by weight of the total resin in the total amount of the primer composition.

Examples of the form of the base material include, but is not limited to, film form, sheet form, plate form and fibrous form. Also, the base material may be molded bodies of the materials having these forms or structural bodies provided with at least one of the materials having these forms and their molded materials as a part thereof.

The base material may be those comprising each of the aforementioned various materials singly, or composite materials produced by combining at least two materials among the aforementioned various materials, or laminate materials produced by laminating at least two materials among the aforementioned various materials.

Since a coated film (which is also a coated film provided on the functional coated product of the present invention) formed from the inorganic coating composition of the present invention comprises the photo-semiconductor material, the aforementioned various photocatalytic effects of the photo-semiconductor material including the provision of surface hydrophilicity are developed. It takes a certain period of time to develop this photocatalytic effect after ultraviolet rays are applied. However, the silicone resin having a group which is easily oxidized by ultraviolet rays is used as a major component of the aforementioned inorganic coating composition. Hence, when ultraviolet rays are applied, this silicone resin is rapidly oxidized and decomposed, allowing the coated film to exhibit surface hydrophilicity immediately. Therefore, functions such as cleaning ability by the aid of rain water and fogging resistance owing to the surface hydrophilicity (wettability to water) are developed in a short period after ultraviolet rays are applied. Also, weather resistance of the coated film is improved and further the effect of decreasing the adsorption of fouling is produced. Therefore, the coated film is placed in a part of various materials or products, whereby it is used appropriately in the following applications:

Materials and products relating to buildings such as armoring materials (e.g., external wall materials and roofing tiles such as plate roof tiles, Japan roof tiles and metal roof tiles), drainspouts such as drainspouts made of a resin, e.g., vinyl chloride drainspouts and drainspouts made of a metal, e.g., stainless drainspouts, gates and materials used for the gates (e.g., the doors of gates, gate posts and gate fences), fences and materials used for the fences, garage doors, home terraces, doors, pillars, car ports, ports for parking bicycles, signposts, home delivery posts, wiring accessories, e.g., distribution panels and switches, gas meters, intercommunication systems, door-phones and camera lens portion of televisions, electric keys, entrance poles, porches, diffusers of ventilators and glass for buildings; windows (e.g., lighting windows, skylights, movable windows, e.g., louvers) and materials used for them (e.g., window frames, storm doors and blinds), automobiles, rolling stocks, airplanes, ships, machines, peripheral materials on roads (e.g., sound insulating walls, interior plates of tunnels, various display units, guard rails, buffer stops, balustrades, sign plates and sign poles of traffic control signs, signals and postcones), advertising towers, indoor or outdoor lightning equipment and materials used for the equipment (e.g., materials comprising at least one material selected from the group consisting of glass, resins, metals and ceramics), glass for solar cells, vinyl and glass houses for agriculture, outdoor machines for air conditioners and VHF, UHF, BS and CS antennas.

It is to be noted that although the inorganic coating composition of the present invention may be applied directly to at least a part of the aforementioned various materials and products and cured, its use is not limited to this and, for example, the inorganic coating composition may be applied to a surface of a film base material and cured to form a functional film, which is then applied to at least a part of the aforementioned various materials and products. Examples of materials used for such a film base material include, but is not limited to, resins such as polyethylene terephthalate (PET) resins, polybutylene terephthalate (PBT) resins, vinyl chloride resins, acrylic resins, fluororesins, polypropylene (PP) resins and composite resins of these resins.

### Examples

The present invention will be hereinafter explained in detail by way of examples and comparative examples. In these examples and comparative examples, all designations of [parts] and [%] indicate [parts by weight] and [percentages by weight (wt.%)], respectively, as far as it is otherwise specifically indicated. In addition, the molecular weight was measured by means of GPC (gel permeation chromatography) using a measuring instrument, HLC8020 (Tosoh Corporation) as a converted value based on a calibration curve made using standard polystyrene. It is noted that the present invention is not limited to the examples described below.

Examples 1 to 9 and Comparative Example 1 illustrate the examples using the photo-oxidizable silicone resin (1).

### Example 1

One hundred parts of isopropyl alcohol (abbreviated as IPA in this specification as the case may be) as a dilution solvent was blended with 100 parts (0.74 mol) of methyltrimethoxysilane as the organosilane (B) corresponding to formula (II) in which m is 1, 30 parts (0.16 mol) of phenyltrimethoxysilane as the organosilane (A) corresponding to formula (I) in which m is 1, 10 parts (0.048 mol) of tetraethoxysilane as the organosilane (C) and 90 parts (0.45 mol) of IPA organosilica sol (trade name: OSCAL1432, manufactured by Shokubai Kasei Kogyo K.K., solid content: 30%) as acidic colloidal silica, to which 90 parts of water was further added. The mixture was stirred. The resulting solution was heated at 60°C for 5 hours in a thermostat whereby the weight average molecular weight (Mw) of organosiloxane (A) which was the reaction product was controlled to 1200 to 1800 to obtain an alcohol solution of a photo-oxidizable silicone resin.

Condition for preparing an alcohol solution of the photo-oxidizable silicone resin:

| | |
|---|---|
| [Water/alkoxy group] mol ratio | 1.75 |
| Weight average molecular weight | 1200 - 1800 |
| Converted solid content of total condensate compound | 23.5% |

To this solution was added titanium oxide sol (trade name: QUEEN TITANIC 11-1020G, manufactured by Shokubai Kasei Kogyo K.K.) as the photo-semiconductor material in an amount of 20 parts for 100 parts of the sum of the photo-oxidizable silicone resin and the photo-semiconductor material component in the total amount of the coating on the solid basis to obtain an inorganic coating composition (1).

The inorganic coating composition (1) was applied to a glass substrate, which was washed with acetone, by the spray coating method. The coated film was dried for 0.5 hours at room temperature to cure and thereafter it was baked at 150°C for one hour to obtain a hydrophilic inorganic coated film (1). The thickness of the cured coated film was 0.2 µm.

### Example 2

An inorganic coating composition (2) was obtained in the same manner as in Example 1 except that a titanium oxide powder (trade mark: ST-01, titanium oxide manufactured by Ishihara Sangyo K.K.) was used as the photo-semiconductor material in the same amount in place of the titanium oxide sol.

The inorganic coating composition (2) was applied to a glass substrate, which was washed with acetone, by a spray coating method. The coated film was dried for 0.5 hours at room temperature to cure and thereafter it was baked at 150°C for one hour to obtain a hydrophilic inorganic coated film (2). The thickness of the cured coated film was 0.5 µ m.

### Example 3

An inorganic coating composition (3) was obtained in the same manner as in Example 1 except that 30 parts (0.12 mol) of 3-acryloxypropyltrimethoxysilane was used in place of phenyltrimethoxysilane.

Condition for preparing an alcohol solution of the photo-oxidizable silicone resin:

| | |
|---|---|
| [Water/alkoxy group] mol ratio | 1.75 |
| Weight average molecular weight | 1000 - 1700 |
| Converted solid content of total condensate compound | 24% |

Next, the same procedure as in Example 1 was carried out using the inorganic coating composition (3) to obtain a hydrophilic inorganic coated film (3).

### Example 4

A hydrophilic inorganic coated film (4) was obtained by carrying out the same procedure as in Example 1 was conducted except that the inorganic coating composition (3) obtained in Example 3 was used in place of the inorganic coating composition (1) and an aluminum substrate was used as the base material in place of the glass substrate.

### Example 5

An inorganic coating composition (5) was obtained in the same manner as in Example 1 except that 30 parts (0.12 mol) of 3-acryloxypropyltrimethoxysilane was used in place of phenyltrilmethoxysilane and the amount of the titanium oxide sol used as the photo-semiconductor material was altered to 5 parts. Incidentally, the condition for preparing an alcohol solution of organosiloxane was the same as in Example 3.

Next, a hydrophilic inorganic coated film (5) was obtained by carrying out the same procedure as in Example 1 was conducted except that the inorganic coating composition (5) was used in place of the inorganic coating composition (1) and an aluminum substrate was used as the base material in place of the glass substrate.

### Example 6

An inorganic coating composition (6) was obtained in the same manner as in Example 1 except that 30 parts (0.12 mol) of 3-acryloxypropyltrimethoxysilane was used in place of phenyltrimethoxysilane and the amount of the titanium oxide sol used as the photo-semiconductor material was altered to 80 parts. Incidentally, the condition for preparing an alcohol solution of organosiloxane was the same as in Example 3.

The inorganic coating composition (6) was applied to a glass substrate, which was washed with acetone, by a spray coating method. The coated film was dried for 0.5 hours at room temperature to cure and thereafter it was baked at 200°C for one hour to obtain a hydrophilic inorganic coated film (6). The thickness of the cured coated film was 0.1 µ m.

### Example 7

A hydrophilic inorganic coated film (7) was obtained except that γ-glycidoxypropyltrimethoxysilane was used in place of 3-acryloxypropyltrimethoxysilane.

### Example 8

An aluminum substrate was washed with acetone and a silicone type coating agent (trade name: FLESSELA N, manufactured by Matsushita Denko K.K.) was applied to a surface of the aluminum substrate, followed by drying, to obtain a 1.5- µm-thick primer coated film. The inorganic coating composition (1) was applied to the primer coated film, dried and cured in the same manner as in Example 1 to obtain a hydrophilic inorganic coated film (8).

### Example 9

An aluminum substrate was washed with acetone and a silicone type coating agent (trade name: FLESSELA AQUEOUS TYPE, manufactured by Matsushita Denko K.K.) was applied to a surface of the aluminum substrate, followed by drying, to obtain a 1.5- µm-thick primer coated film. The inorganic coating composition (1) was applied to this primer coated film, dried and cured in the same manner as in Example 1 to obtain a hydrophilic inorganic coated film (9).

### Comparative Example 1

One hundred parts of methanol as a dilution solvent was blended with 100 parts (0.74 mol) of methyltrimethoxysilane as the organosilane (B), 5 parts (0.024 mol) of tetraethoxysilane as the organosilane (C) and 90 parts (0.45 mol) of methanol-dispersion-silica sol (trade name: MT-ST, manufactured by Nissan Kagaku Kogyo K.K., solid content: 30%) as acidic colloidal silica, to which 45 parts of water was further added. The mixture was stirred. The resulting solution was heated at 60°C for 5 hours in a thermostat whereby the weight average molecular weight (Mw) of an organosiloxane (A) which was the reaction product was controlled to 1500 to 1800 to obtain an alcohol solution of organosiloxane.

Condition for preparing an alcohol solution of organosiloxane:

| | |
|---|---|
| [Water/alkoxy group] mol ratio | 1.08 |
| Weight average molecular weight | 1500-1800 |
| Converted solid content of total condensate compound | 23.7% |

To this solution was added a titanium oxide sol (trade name: QUEEN TITANIC 11-1020G, manufactured by Shokubai Kasei Kogyo K.K.) as the photo-semiconductor material in an amount of 50 parts for 100 parts of the sum of the photo-oxidizable silicone resin and the photo-semiconductor material component in the total amount of the coating on the solid basis to obtain a comparative inorganic coating composition (1).

The comparative inorganic coating composition (1) was applied to a glass substrate, which was washed with acetone, by a spray coating method. The coated film was dried for 0.5 hours at room temperature to cure and thereafter it was baked at 150°C for one hour to obtain a comparative hydrophilic inorganic coated film (1). The thickness of the cured coated film was 0.1 µm.

Examples 10 to 12 illustrate the examples using the silicone resin (2).

### Example 10

### (1) Preparation of silica dispersion solution of photo-oxidizable silicone resin

A flask equipped with a stirrer, a heating jacket, a condenser and a thermometer was charged with 100 parts of an IPA dispersion colloidal silica sol IPA-ST (particle diameter: 10-20 nm, solid content: 30%, water content: 0.5%, manufactured by Nissan Kagaku Kogyo K.K.), 60 parts (0.44 mol) of methyltrimethoxysilane as the organosilane (B), 30 parts (0.12 mol) of 3-acryloxypropyltrimethoxysilane as the organosilane (A) and 10.8 parts of water. The mixture was stirred at 65°C for 5 hours to carry out a partial hydrolyzing reaction, followed by cooling to obtain a silica dispersion solution of the photo-oxidizable silicone resin. The solid content of the dispersion solution after it was allowed to stand for 48 hours was 33.7%.

Condition for preparing a silica dispersion solution of the photo-oxidizable silicone resin:

| | |
|---|---|
| Mols of water per one mol equivalent of alkoxy group | 0.36 mols |
| Content of silica for converted solid content of total condensate compound in silica dispersion solution | 36.9% |
| Mol% of organosilanes (A) and (B) | 100 mol% |

### (2) Preparation of silanol group-containing polyorganosiloxane solution

A flask equipped with a stirrer, a heating jacket, a condenser, a dropping funnel and a thermometer was charged with a solution in which 220 parts (one mol) of methyltriisopropoxysilane was dissolved in 150 parts of toluene. 108 parts of an aqueous 1% hydrochloric acid solution was added dropwise to the solution over 20 minutes to hydrolyze methyltriisopropoxysilane with stirring at 60°C. When the stirring was stopped 40 minutes after the dropping was completed and the reaction solution was poured into a separating funnel and allowed to stand, the reaction solution was separated into two layers. A mixture solution of water including a slight amount of hydrochloric acid and isopropyl alcohol in the lower layer was removed by separation and hydrochloric acid remaining in the remainder resin solution of toluene was removed by washing with water. Further, toluene was distilled under converted pressure and thereafter the residue was diluted with isopropyl alcohol to obtain an isopropyl alcohol solution of polyorganosiloxane containing a silanol group and having a weight average molecular weight (Mw) of about 2000. The converted solid content of total condensate compound in this solution was 40%. It has been confirmed that the silanol group-containing polyorganosiloxane in this solution satisfies the aforementioned formula (II) which is the average composition formula.

### (3) Preparation of inorganic coating composition

Sixty parts (about 20 parts as converted solid content of the total condensate compound) of the silica dispersion solution of the photo-oxidizable silicone resin, 30 parts (about 12 parts as converted solid content of the total condensate compound) of a silanol group-containing polyorganosiloxane solution and 1 part of N-β-aminoethyl-γ-aminopropylmethyldimethoxysilane were mixed with each other. Then, to the mixture was added a titanium oxide sol (titanium oxide sol manufactured by Shokubai Kasei Kogyo K.K., trade name: QUEEN TITANIC 11-1020G) in an amount of 20 parts for 100 parts of the sum of the photo-oxidizable silicone resin and the photo-semiconductor material component in the total amount of the coating on the solid basis to obtain an inorganic coating composition (7).

The inorganic coating composition (7) was applied to a stainless substrate, which was washed with acetone, by a spray coating method. The coated film was dried for 0.5 hours at room temperature to cure and thereafter it was baked at 120°C for one hour to obtain a hydrophilic inorganic coated film (10). The thickness of the cured coated film was 0.1 µm.

### Example 11

An inorganic coating composition (8) was obtained in the same manner as in Example 10 except that a titanium oxide powder (trade name: ST-01, titanium oxide manufactured by Ishihara Sangyo K.K.) was used as the photo-semiconductor material in place of the titanium oxide sol.

The inorganic coating composition (8) was applied to a stainless substrate, which was washed with acetone, by a spray coating method. The coated film was dried for 0.5 hours at room temperature to cure and thereafter it was baked at 120°C for one hour to obtain a hydrophilic inorganic coated film (11). The thickness of the cured coated film was 0.5 µm.

### Example 12

The inorganic coating composition (7) obtained in Example 10 was applied to a window glass (1 m², thickness: 6 mm) of a building on the premises of Matsushita Denko K.K. at Kadoma in Osaka by using a spray coating method so that the thickness of the cured coated film was 0.1 µm, cured by drying day and night at room temperature and thereafter baked at 100°C for one hour to obtain a hydrophilic inorganic coated film (12).

### Evaluation of qualities of coated films

The film qualities of the hydrophilic inorganic coated films obtained in the above manner were evaluated by the following methods. The results are shown in Table 1.

### Method of evaluation

### (1) Adhesiveness:

The adhesiveness to a base material was evaluated by a cross-cut adhesive tape (using cellophane tape) peeling test.

### (2) Hardness of coated film

This was evaluated by the pencil hardness test (according to JIS-K5400)

### (3) Surface hydrophilicity (wettability to water):

This was evaluated by measuring the contact angle between water and the coated film after ultraviolet lays were applied for 30 minutes by using "Handy UV300" manufactured by Oak Seisakusho. The measurement of the contact angle was made by dropping 0.2 cc of distilled water on a surface of the coated film and thereafter by observing it using a magnifying camera. It is understood that the smaller the contact angle, the higher the hydrophilicity is.

### (4) Evaluation of painted products

Water was dropped on a surface of the coated surface, and wettability was observed.

**Table 1**

| Example number | Adhesiveness | Hardness of coated film | Surface hydrophilicity | | |
|---|---|---|---|---|---|
| | | | After 5 minutes | After 10 minutes | Retained hours |
| Example 1 | 100/100 | H | 40° | <10° | 400 or more |
| Example 2 | 100/100 | 2H | 40° | <10° | 400 or more |
| Example 3 | 100/100 | H | <10° | <10° | 400 or more |
| Example 4 | 100/100 | H | <10° | <10° | 400 or more |
| Example 5 | 100/100 | 2H | <10° | <10° | 400 or more |
| Example 6 | 100/100 | H | <10° | <10° | 400 or more |
| Example 7 | 100/100 | H | <10° | <10° | 400 or more |
| Example 8 | 100/100 | H | <10° | <10° | 400 or more |
| Example 9 | 100/100 | 2H | <10° | <10° | 400 or more |
| Example 10 | 100/100 | F | <10° | <10° | 400 or more |
| Example 11 | 100/100 | H | <10° | <10° | 400 or more |
| C. Example 1 | 100/100 | H | 70° | 40° | 48 |

As shown in Table 1, Examples 1-11 using a silicone resin having a group which is easily oxidizable by ultraviolet rays all had a contact angle to water lower than 10 degrees at 30 minutes after the film was irradiated with ultraviolet rays, showing that they had good hydrophilicity. Also, the ability for retaining hydrophilicity was as high as 400 hours or more since the coated film comprised a photo-semiconductor material.

On the contrary, the coated film of Comparative Example 1 using a silicon resin having no group which is easily oxidizable by ultraviolet rays exhibited insufficient hydrophilicity at 30 minutes after the film was irradiated with ultraviolet rays.

The coated films of Examples 8 and 9 were applied to a base material provided with a primer coated film formed from a silicone material in the form of aqueous emulsion. Therefore, the coating material was well-applied.

Example 12 in which the inorganic coating composition (7) of Example 10 was applied to a window exhibited good wettability about two weeks after actual painting was made.

### Effect of the Invention

The inorganic coating composition of the present invention, because it comprises a photo-semiconductor material, can form an excellent functional coated film which sufficiently exhibits various qualities, derived from the photocatalytic effect of the photo-semiconductor material, such as, antibacterial ability, deodorizing ability, fogging resistance and staining resistance by the aid of the cleaning effect of rain water owing to improved surface hydrophilicity (wettability to water) and further staining resistance due to antistatic function. It takes a certain period of time to develop the above photocatalytic effect after the application of ultraviolet rays are started. However, because the silicone resin having a group which is easily oxidized by ultraviolet rays is used as a major component of the above inorganic coating composition, the silicone resin is oxidized and decomposed at once upon irradiation of ultraviolet rays allowing the coated film to exhibit surface hydrophilicity. Therefore, functions such as cleaning ability by the aid of rain water and fogging resistance owing to a surface hydrophilicity (wettability to water) are developed in a short period after ultraviolet rays are applied. Also, the weather resistance of the coated film is improved and further the effect of decreasing the adsorption of fouling is produced. The above silicone resin having a functional group is improved in the effect of retaining the hydrophilicity of a surface of the coated film for a long period of time once a surface is made hydrophilic.

Furthermore, because the aforementioned inorganic coating composition is an inorganic type, the qualities of the coated film is scarcely damaged by addition of various additives such as photo-semiconductor materials. It is therefore possible to form a functional coated film which is resistant to deterioration caused by ultraviolet rays and has high weather resistance and durability. Also, the inorganic coating composition can be toned to various colors, allowing a high grade of design and wide range applications.

The photo-semiconductor material, once it is excited, can retain a photocatalytic function even if ultraviolet rays are not applied afterwards and hence the coated film containing the photo-semiconductor material can be used even at positions which are not irradiated with ultraviolet rays. Also, the function (especially the hydrophilicity of a surface of the coated film) of the photo-semiconductor material is compensated by an effect of imparting hydrophilicity due to the oxidation and decomposition of the silicone resin having the above functional group for a term until the photo-semiconductor material develops its effect. Therefore, the coated film prepared from the above inorganic coating composition becomes an ideal functional coated film.

## Claims

1. An inorganic coating composition which comprises a photo-oxidizable silicone resin having a photo-oxidizable group as a major component, and a photo-semiconductor material.

2. The inorganic coating composition according to Claim 1, wherein the photo-oxidizable group is at least one type selected from the group consisting of an alkyl group having not less than three carbon atoms, a cycloalkyl group, an aralkyl group, an aryl group, an alkenyl group, a halogen substituted hydrocarbon group, a group having a tertiary hydrogen atom (>CH-), a group having a C-H bond at the α-position based on a carbon-carbon double bond and a group having a branch point.

3. The inorganic coating composition according to Claim 1, wherein the photo-oxidizable group is at least one type selected from the group consisting of a propyl group, a butyl group, a pentyl group, a hexyl group, a heptyl group, an octyl group, a cyclopentyl group, a cyclohexyl group, a 2-phenylethyl group, a 2-phenylpropyl group, a 3-phenylpropyl group, a phenyl group, a tolyl group, a vinyl group, an allyl group, a chloromethyl group, a γ-chloropropyl group, a 3,3,3-trifluoropropyl group, a γ-acryloxypropyl group, a γ-methacryloxypropyl group, a γ-glycidoxypropyl group and a 3,4-epoxycyclohexylethyl group.

4. The inorganic coating composition according to Claim 1, wherein the silicone resin is present in an amount of 5 to 50% by weight in a solid.

5. The inorganic coating composition according to Claim 1, wherein the total concentration of the photo-oxidizable silicone resin and the photo-semiconductor material is not more than 5% by weight for the total amount of the coating on the solid basis.

6. The inorganic coating composition according to Claim 1, wherein the photo-semiconductor material is at least one type selected from the group consisting of titanium oxide, zinc oxide, tin oxide, iron oxide, zirconium oxide, tungsten oxide, chromium oxide, molybdenum oxide, ruthenium oxide, germanium oxide, lead oxide, cadmium oxide, copper oxide, vanadium oxide, niobium oxide, tantalum oxide, manganese oxide, cobalt oxide, rhodium oxide, nickel oxide and rhenium oxide.

7. The inorganic coating composition according to Claim 1, wherein the photo-semiconductor material is titanium oxide.

8. A hydrophilic inorganic coated film which comprises a photo-oxidizable silicone resin having a photo-oxidizable group as a binder component, and a photo-semiconductor material.

9. The hydrophilic inorganic coated film according to Claim 8, wherein thickness of the cured film is 0.01 to 1 µ m.

10. The hydrophilic inorganic coated film according to Claim 8, which is formed on a primer coated film.

11. The hydrophilic inorganic coated film according to Claim 10, wherein the primer coated film is formed from a silicone material in the form of aqueous emulsion.

12. A process for forming a hydrophilic inorganic coated film on a surface of a base material comprising the steps of:
(1) applying an inorganic coating composition which comprises a photo-oxidizable silicone resin having a photo-oxidizable group as a major component, and a photo-semiconductor material to form a coated layer; and
(2) drying and curing the coated layer to form a cured coated film.
